# EUROPÄISCHE PATENTSCHRIFT

(11) **EP 3 350 877 B1**
(45) Veröffentlichungstag und Bekanntmachung des Hinweises auf die Patenterteilung: **21.07.2021**
(21) Anmeldenummer: 16763237.1
(22) Anmeldetag: 06.09.2016
(51) Int. Cl.: H01Q 1/42, G01S 7/03, B60R 13/00, G01S 13/931

(54) **RADOM**
RADOME
RADÔME

(30) Priorität: 16.09.2015 DE 102015217744
(43) Veröffentlichungstag der Anmeldung: 25.07.2018
(73) Patentinhaber: Nanogate SE, 66287 Quierschied-Göttelborn (DE)
(72) Erfinder: GURETZKY, Mirko, 32108 Bad Salzuflen (DE); KÄSTNER, Matthias, 32457 Porta Westfalica (DE); WISOMIERSKY, Jan, 32756 Detmold (DE); WEISS, Norbert, 86551 Aichach (DE)
(74) Vertreter: dompatent von Kreisler Selting Werner - Partnerschaft von Patent- und Rechtsanwälten mbB
(86) Internationale Anmeldenummer: PCT/EP2016/070930
(87) Internationale Veröffentlichungsnummer: WO 2017/045968

(56) Entgegenhaltungen:
- DE-A1-102012 018 328
- DE-B3-102006 046 436
- US-A1- 2005 181 531
- US-A1- 2006 083 015
- US-A1- 2011 047 784
- US-A1- 2012 119 961

## Beschreibung

Gegenstand der Erfindung ist ein Radom für ein Abstandswarnradar eines Kraftfahrzeuges mit einem von außen sichtbaren, in dem Radom integrierten Designelement, beispielsweise einem Markenemblem sowie ein Verfahren zu seiner Herstellung.

Das radardurchlässige Bauteil wird im Strahlengang eines an einem Kraftfahrzeug installierten Radarstrahlers angebracht. Dieses Radom schützt den Radarstrahler vor Umwelteinflüssen und bedeckt zugleich den erforderlichen offenen Strahlengang mit einer definierten und auf den Wellenbereich angepassten Geometrie. Es gewährleistet somit eine Integration des Radarstrahlers in das homogene Erscheinungsbild des Fahrzeuges, ohne die Funktion zu beeinträchtigen. Das Radom kann in der Gestalt eines Designelements ausgeführt werden und kann somit zur direkten Identifikation und Charakteristik des Fahrzeuges beitragen.

DE 198 44 021 C2 beschreibt ein innerhalb des Strahlenganges eines Radargerätes liegendes Verkleidungsteil aus Kunststoff mit von außen sichtbaren Teilbereichen aus Metall, bei dem
- das Kunststoffteil mehrschichtig aufgebaut ist,
- Teilbereiche aus Metall von einer auf eine der Schichten, die als Träger fungiert, aufgedampften extrem dünnen Schicht gebildet werden,
- die Teilbereiche aus Metall zu der Oberflächenseite hin, von der aus sie nach außen sichtbar erscheinen sollen, mit einer durchsichtigen Schicht abgedeckt oder auf diese aufgedampft sind,
- die Metallschicht in dem gesamten von den Radarstrahlen zu durchdringenden Bereich vollflächig aufgebracht und in denjenigen Bereichen, in den sie von außen nicht sichtbar sein soll, durch eine undurchsichtige Schicht abgedeckt ist, das dadurch gekennzeichnet ist, dass die Metallschicht aus Indium besteht und eine Dicke im Nanometer-Bereich aufweist.

JP 2008-24 254 A beschreibt einen Aufbau und ein Verfahren zur Herstellung eines Radoms für ein Kfz-Abstandswarnradar. Das dort beschriebene Radom besteht aus einem Träger, einem Designelement und einer Oberflächenschicht. In den Träger aus dunklem Kunststoff wird das Designelement integriert und mit einer dünnen, radartransparenten, glänzenden Metallschicht versehen. Die Oberflächenschicht besteht aus transparentem Kunststoff, der sowohl das Designelement als auch den Träger bedeckt.

Das Herstellungsverfahren gemäß EP 0 954 052 B2 ist sehr aufwendig. Das Designelement wird in einer Radar-und visuell transparenten Deckplatte in eine Negativform eingelassen, wobei diese Form mit einer metallischen oder metallisch glänzenden Schicht versehen wird und die metallische oder metallisch glänzende Schicht in ihrer Stärke so gehalten ist, dass im sichtbaren Wellenlängenbereich die elektromagnetische Strahlung vollständig reflektiert wird und die längerwelligen Radarwellen nahezu ungehindert hindurch treten.

Die bekannten Abdeckungen / Verblendungen des Abstandswarners werden in Fügetechnik erstellt. Bei diesem Verfahren müssen Lufteinschlüsse (siehe EP 0 954 052 B1, [0012]) verhindert werden, um einen störungsfreien Radardurchgang zu gewährleisten. Dies führt zu hohen Kosten. Zusätzlich muss die visuell transparente Oberfläche des Bauteils mit einem Hardcoat beschichtet werden, um Kratzschutz, Chemikalien- und UV-Beständigkeit zu gewährleisten. Diese Beschichtung verursacht ebenfalls nicht unerhebliche Kosten.

Weitere Herstellungsverfahren eines Radoms für Radarfrequenzen eines Abstandswarners eines Kraftfahrzeuges sind aus US 2012/119961 A1, DE 10 2012 018328 A1, DE 10 2006 046436 B3, US 2006/083015 A1, und US 2005/181531 A1 bekannt.

Die Aufgabe der vorliegenden Erfindung besteht in der Bereitstellung eines verbesserten Radoms für einen Abstandswarner eines Kraftfahrzeuges mit einem von außen sichtbaren, in dem Radom integrierten Designelement sowie in einem verbesserten Verfahren zu seiner Herstellung.

In einer ersten Ausführungsform der vorliegenden Erfindung wird die vorgenannte Aufgabe gelöst durch ein Verfahren zur Herstellung eines Radoms 1 für Radarfrequenzen eines Abstandswarners eines Kraftfahrzeuges mit einem von außen sichtbaren, integrierten Designelement 2 auf der Oberfläche 3 eines thermoplastischen oder duroplastischen Trägers 4 mit einer dreidimensionalen Anmutung des Designelements (2) auf der Oberfläche des Trägers (4) und einer visuell transparenten Beschichtung 5 auf der freiliegenden Oberfläche des Designelements 2 und der das Designelement 2 umgebenden Fläche 3 des Trägers 4, wobei man
- in einem ersten Schritt den Träger 4 herstellt,
- in einem zweiten Schritt das Designelement 2 auf die Oberfläche des Trägers 4 aufbringt und
- in einem dritten Schritt die transparente Beschichtung auf die freiliegende Oberfläche des Designelements und die das Designelement umgebenden Fläche des Trägers durch Sprühen, Fluten oder Tauchen aufbringt.

Das erfindungsgemäße Radom 1 weist einen einfachen ressourcenschonenden Aufbau auf, bei dem das Designelement 2 vollständig in das Bauteil eingebettet ist. Das Designelement 2 kann beispielsweise ein Markenemblem oder eine charakteristische Struktur eines Kraftfahrzeuges bei gleichzeitiger voller Radartransparenz ohne Beeinflussung der Ausbreitung von Radarwellen durch Beugung, Brechung, Steuerung und Reflexion integriert enthalten, wobei die Abbildungseigenschaften des Radoms 1 vollständig erhalten bleiben. Hierbei kann das Radom 1 auch die Form und Funktion eine Linse aufweisen. Das Radom 1 besteht somit aus einem Radar transparenten, nicht visuell transparenten Träger 4, der insbesondere von dunkler Farbe (beispielsweise schwarz), opak oder entsprechend beschichtet ist. Auf der dem Strahlengang der Radar-Quelle abgewandten Oberfläche 3 des Trägers 4 befindet sich das Designelement 2 in direktem flächigen Kontakt mit dem Träger 4, sofern dessen Oberfläche 3 nicht vor Aufbringen des Designelements 2 mit einer funktionellen Beschichtung versehen ist. Die hier freiliegende, von außen sichtbare Oberfläche des Designelements 2 sowie die hier freiliegenden Oberfläche 3 des Trägers 4 ist mit einer visuell transparenten Beschichtung 5 versehen.

In einer bevorzugten Ausführungsform der vorliegenden Erfindung ist das Designelement 2 metallisch oder metallisch glänzend. Diese Schicht kann beispielsweise durch an sich bekannte PVD-Verfahren aufgebracht werden und ist vorzugsweise so dünn gehalten, dass im sichtbaren Wellenlängenbereich die elektromagnetische Strahlung bzw. das Licht von Außen für den Betrachter im Wesentlichen vollständig reflektiert wird, jedoch die längerwelligen Radarwellen in Gegenrichtung nahezu ungehindert hindurchtreten. Die Dicke einer dünnen Schicht des Designelements 2 ist für verschiedene Beschichtungswerkstoffe experimentell ermittelbar. Sie beträgt beispielsweise einige Nanometer bis Mikrometer.

Besonders bevorzugt im Sinne der vorliegenden Erfindung umfasst das Designelement 2 wenigstens eine metallische Schicht, die Gold, Silber, Indium, Chrom, Aluminium, Kupfer, Edelstahl, Silizium und/oder Titan umfasst. Alternativ oder kumulativ hierzu kann das Radom 1 auch wenigstens eine Lackschicht, insbesondere in der Außenfarbe des Kraftfahrzeuges umfassen.

Der Träger 4 des Radoms 1 kann auf beliebige Weise nach an sich bekannten Verfahren hergestellt werden. Bei thermoplastischen Trägern 4 bietet sich das Spritzgießen an, insbesondere um eine dreidimensionale Anmutung des Designelement 2 auf seiner Oberfläche 3 abbilden zu können. Hierzu können im Stand der Technik verwendete thermoplastische Materialien eingesetzt werden, wobei der gegebenfalls spritzgegossene Träger 4 insbesondere Polyurethan (PUR), Polycarbonat (PC), Polymethylmethacrylat (PMMA) und/oder Acrylnitil-Butadien-Styrol (ABS) enthält.

Die visuell transparente Beschichtung 5 kann verschiedenste Materialien umfassen und durch verschiedenste Verfahren aufgebracht werden. Sehr geeignet im Sinne der vorliegenden Erfindung sind Kunststoffbeschichtungen aufgrund der üblicherweise vorhandenen visuellen Transparenz. Von Bedeutung ist hier die Witterungsbeständigkeit, wenn diese Beschichtung bei einem Fahrzeug der Umwelt direkt ausgesetzt ist. Besonders bevorzugt im Sinne der vorliegenden Erfindung sind beispielsweise im Handel erhältliche Kratzfestbeschichtungen aus Siloxanen (siehe beispielsweise EP 2 177 575 A1), die einfach appliziert werden können. Alternativ kann die Beschichtung 5 aber auch weniger beständige Beschichtungen aus einfacheren Polymeren umfassen. In einer bevorzugten Ausführungsform umfasst die Beschichtung an sich bekannte Thermopaste oder Duroplaste, wie bevorzugterweise eine visuell transparente Beschichtung 5 aus Polyurethan oder Polycarbonat, da dieses in vielfältiger Weise auf die freiliegenden Oberfläche des Designelements 2 und die freiliegende Oberfläche 3 des Trägers 4 aufgebracht werden kann. Gegebenenfalls kann die Beschichtung 5 sofern erforderlich mit einer weiteren Beschichtung (in der Fig. nicht dargestellt) versehen werden. Zum Schutz der Radomoberfläche vor mechanischen oder chemischen Einflüssen kann diese Beschichtung beispielsweise mittels Chemical-Vapour-Deposition (CVD) eine visuell transparente, Radar-transparente, nur wenige Mikrometer dicke glasartige Schicht, die SiO₂ enthalten kann. Kratzfeste Radar-transparenten Beschichtungen können bekannterweise auch mit Hilfe bekannter Lackier-oder Sol Gel-Technik aufgebracht werden. Diese weitere Beschichtung kann insbesondere dann vorgesehen sein, wenn die Witterungseigenschaften der Beschichtung 5 nicht ausreichend sind. Hier eignen sich beispielsweise die oben beschriebenen Kratzfestbeschichtungen.

Eine weitere Ausführungsform der vorliegenden Erfindung betrifft ein Radom für Radarfrequenzen eines Abstandswarners eines Kraftfahrzeuges, erhalten mit dem Verfahren wie oben definiert.

Das Verfahren zeichnet sich insbesondere durch seine Einfachheit gegenüber dem bekannten Verfahrendes Standes der Technik aus.

Besonders bevorzugt im Sinne der vorliegenden Erfindung ist es, den Träger 4 durch Spritzgießen herzustellen. Hierbei ist eine oberflächengenaue Darstellung des Designelements 2 möglich.

Das Designelement 2 kann beispielsweise durch Metallisierung, Physical-Vapour-Deposition (PVD) oder Druckverfahren, insbesondere Tampondruck, Digitaldruck, Inkjetdruck, Laserdruck, Transferdruck oder Siebdruck aufgebracht werden.

Besonders bevorzugt im Sinne der vorliegenden Erfindung wird die transparente Beschichtung 5 durch Sprühen, Fluten oder Tauchen aufgebracht. Diese Verfahrensweise ist insbesondere angebracht, wenn die transparente Beschichtung 5 unter Einsatz von Polyurethan aufgebracht wird.

Trotz der drei Herstellungsschritte ist das Bauteil am Ende einteilig und kein Fügeteil. Lufteinschlüsse sind somit ausgeschlossen.

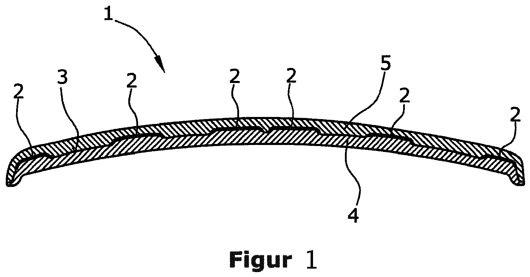

## Patentansprüche

1. **Verfahren zur Herstellung eines** Radoms (1) für Radarfrequenzen eines Abstandswarners eines Kraftfahrzeuges mit einem von außen sichtbaren, integrierten Designelement (2) auf der Oberfläche (3) eines thermoplastischen oder duroplastischen Trägers (4) mit einer dreidimensionalen Anmutung des Designelements (2) auf der Oberfläche des Trägers (4) und einer visuell transparenten Beschichtung (5) auf der freiliegenden Oberfläche des Designelements (2) und der das Designelement (2) umgebenden Fläche des Trägers (4) wobei **man**
- **in einem ersten Schritt den Träger (4) herstellt,**
- **in einem zweiten Schritt das Designelement (2) auf die Oberfläche des Trägers (4) aufbringt dadurch gekennzeichnet, dass** man
- **in einem dritten Schritt die transparente Beschichtung (5) auf die freiliegende Oberfläche (3) des Designelements (2) und die das Designelement (2) umgebenden Fläche des Trägers (4) durch Sprühen, Fluten oder Tauchen aufbringt.**

2. **Verfahren** nach Anspruch 1, **dadurch gekennzeichnet, dass** das Designelement (2) metallisch oder metallisch glänzend ist.

3. **Verfahren** nach Anspruch 2, **dadurch gekennzeichnet, dass** das Designelement (2) wenigstens eine metallische Schicht enthält, die Gold, Silber, Indium, Chrom, Aluminium, Kupfer, Edelstahl, Silizium und/oder Titan umfasst.

4. **Verfahren** nach einem der Ansprüche 1 bis 3, **dadurch gekennzeichnet, dass** das Designelement (2) wenigstens eine Lackschicht, insbesondere in der Außenfarbe des Kraftfahrzeuges umfasst.

5. **Verfahren** nach einem der Ansprüche 1 bis 4, **dadurch gekennzeichnet, dass** der gegebenfalls spritzgegossene Träger (4) Polyurethan (PUR), Polycarbonat (PC), Polymethylmethacrylat (PMMA) und/oder Acrylnitil-Butadien-Styrol (ABS) enthält.

6. **Verfahren** nach einem der Ansprüche 1 bis 5, **dadurch gekennzeichnet, dass** die transparente Beschichtung (5) Polyurethan, Polycarbonat und/oder eine Kratzfestbeschichtung eines Polysiloxans umfasst.

7. **Verfahren** nach einem der Ansprüche 1 bis 6, **dadurch gekennzeichnet, dass** die freiliegende Oberfläche der Beschichtung (5) eine radartransparente glasartige Deckschicht, die insbesondere SiO₂ enthält.

8. Verfahren nach **einem der** Ansprüche 1 **bis 7**, **dadurch gekennzeichnet, dass** man den Träger (4) durch Spritzgießen herstellt.

9. Verfahren nach **einem der** Ansprüche **1 bis** 8, **dadurch gekennzeichnet, dass** man das Designelement (2) durch Metallisierung, Physical-Vapour-Deposition (PVD) oder Druckverfahren, insbesondere Tampondruck, Digitaldruck, Inkjetdruck, Laserdruck, Transferdruck oder Siebdruck aufbringt.

10. **Radom (1) für Radarfrequenzen eines Abstandswarners eines Kraftfahrzeuges,** erhalten **mit dem Verfahren nach einem der Ansprüche 1 bis 9**.

## Claims

1. A process for the production of a radome (1) for radar frequencies of a distance warning system of a motor vehicle with an integrated design element (2) visible from the outside on the surface (3) of a thermoplastic or thermoset support (4) with a three-dimensional appearance of the design element (2) on the surface of the support (4) and a visually transparent coating (5) on the exposed surface of the design element (2) and the surface of the support (4) that surrounds the design element (2), in which
- in a first step, the support (4) is produced,
- in a second step, the design element (2) is applied to the surface of the support (4), **characterized in that**
- in a third step, the transparent layer (5) is applied by spraying, flow coating or dipping to the exposed surface (3) of the design element (2) and to the surface of the support (4) that surrounds the design element (2).

2. The process according to claim 1, **characterized in that** said design element (2) is metallic or has a metallic shine.

3. The process according to claim 2, **characterized in that** the design element (2) contains at least one metallic layer comprising gold, silver, indium, chromium, aluminum, copper, stainless steel, silicon and/or titanium.

4. The process according to any of claims 1 to 3, **characterized in that** the design element (2) comprises at least one paint coat, especially in the exterior color of the motor vehicle.

5. The process according to any of claims 1 to 4, **characterized in that** the support (4), which optionally has been injection-molded, contains polyurethane (PUR), polycarbonate (PC), polymethyl methacrylate (PMMA), and/or acrylonitrile-butadiene-styrene (ABS).

6. The process according to any of claims 1 to 5, **characterized in that** said transparent coating (5) comprises polyurethane, polycarbonate, and/or a scratch-resistant coating of a siloxane.

7. The process according to any of claims 1 to 6, **characterized in that** the exposed surface of coating (5) contains a radar-transparent vitreous cover layer, which may especially contain SiO₂.

8. The process according to any of claims 1 to 7, **characterized in that** said support (4) is prepared by injection molding.

9. The process according to any of claims 1 to 8, **characterized in that** said design element (2) is applied by metallization, physical vapor deposition (PVD) or printing processes, especially tampon printing, digital printing, inkjet printing, laser printing, transfer printing or screen printing.

10. A radome (1) for radar frequencies of a distance warning system of a motor vehicle, obtained by a process according to any of claims 1 to 9.

## Revendications

1. Procédé pour produire un radome (1) pour fréquences de radar d'un indicateur de distance d'un véhicule automobile, comprenant un élément de dessin (2) intégré, visible de l'extérieur, sur la surface (3) d'un support thermoplastique ou thermodurcissable (4) avec une impression tridimensionnelle de l'élément de dessin (2) sur la surface du support (4) et un revêtement (5) visuellement transparent sur la surface exposée de l'élément de dessin (2) et sur la surface du support (4) entourant ledit élément de dessin (2), dans lequel
- le support (4) est préparé dans une première étape,
- l'élément de dessin (2) est appliqué sur la surface du support (4) dans une deuxième étape, **caractérisé en ce que**
- le revêtement transparent (5) est appliqué, dans une troisième étape, sur la surface exposée de l'élément de dessin (2) et sur la surface du support (4) entourant ledit élément de dessin (2) par revêtement par pulvérisation, par immersion ou par trempage.

2. Procédé selon la revendication 1, **caractérisé en ce que** ledit élément de dessin (2) est métallique ou brillant métallique.

3. Procédé selon la revendication 2, **caractérisé en ce que** ledit élément de dessin (2) contient au moins une couche métallique comprenant de l'or, de l'argent, de l'indium, du chrome, de l'aluminium, du cuivre, de l'acier inoxydable, du silicium et/ou du titane.

4. Procédé selon l'une quelconque des revendications 1 à 3, **caractérisé en ce que** ledit élément de dessin (2) comprend au moins une couche de vernis, notamment dans la peinture extérieure du véhicule automobile.

5. Procédé selon l'une quelconque des revendications 1 à 4, **caractérisé en ce que** ledit support (4), qui est éventuellement moulé par injection, contient du polyuréthane (PUR), du polycarbonate (PC), du poly(méthacrylate de méthyle) (PMMA), et/ou de l'acrylonitrile butadiène styrène (ABS).

6. Procédé selon l'une quelconque des revendications 1 à 5, **caractérisé en ce que** le revêtement transparent (5) comprend du polyuréthane, du polycarbonate, et/ou un revêtement anti-rayures de polysiloxane.

7. Procédé selon l'une quelconque des revendications 1 à 6, **caractérisé en ce que** la surface exposée du revêtement (5) contient une couche supérieure vitreuse transparente au radar, notamment contenant du SiO₂.

8. Procédé selon l'une quelconque des revendications 1 à 7, **caractérisé en ce que** ledit support (4) est préparé par moulage par injection.

9. Procédé selon l'une quelconque des revendications 1 à 8, **caractérisé en ce que** ledit élément de dessin (2) est appliqué par métallisation, par dépôt physique en phase vapeur (PVD), ou par un procédé d'impression, notamment tampographie, impression numérique, impression par jet d'encre, impression au laser, impression par transfert, ou sérigraphie.

10. Radome (1) pour fréquences de radar d'un indicateur de distance d'un véhicule automobile, obtenu par un procédé selon l'une quelconque des revendications 1 à 9.
